# EUROPÄISCHE PATENTSCHRIFT

(11) **EP 3 544 541 B1**
(45) Veröffentlichungstag und Bekanntmachung des Hinweises auf die Patenterteilung: **23.12.2020**
(21) Anmeldenummer: 17823026.4
(22) Anmeldetag: 23.11.2017
(51) Int. Cl.: A61C 1/05, A61C 1/12

(54) **STRÖMUNGSBETRIEBENES ZAHNÄRZTLICHES INSTRUMENT**
FLUID-DRIVEN DENTAL INSTRUMENT
INSTRUMENT DENTAIRE ACTIONNÉ PAR ÉCOULEMENT

(30) Priorität: 23.11.2016 DE 102016223105
(43) Veröffentlichungstag der Anmeldung: 02.10.2019
(73) Patentinhaber: Sirona Dental Systems GmbH, 64625 Bensheim (DE)
(72) Erfinder: GOISSER, Siegfried, 64683 Einhausen (DE)
(74) Vertreter: Özer, Alpdeniz
(86) Internationale Anmeldenummer: PCT/EP2017/080150
(87) Internationale Veröffentlichungsnummer: WO 2018/096012

(56) Entgegenhaltungen:
- EP-A1- 1 982 668
- CH-A5- 680 042
- DE-B- 1 064 682

## Beschreibung

### Technisches Gebiet

Die Erfindung betrifft ein druckluftbetriebenes zahnärztliches Instrument umfassend ein Griffteil und ein Kopfteil, wobei das Kopfteil an einem zweiten Ende des Griffteils mittels eines Befestigungsmittels lösbar befestigt ist.

### Stand der Technik

Strömungsbetriebene zahnärztliche Instrumente sind im Stand der Technik in einer Vielzahl von Ausführungsformen bekannt und werden beispielsweise auch als zahnärztliche Turbinen, luftbetriebene Schallhandstücke und Luftmotoren bezeichnet. Strömungsbetriebene zahnärztliche Instrumente sind beispielsweise in EP 1 982 668 A1, DE 1 064 682 B1 und CH 680 042 A5 beschrieben.

Strömungsbetriebene zahnärztliche Instrumente werden nicht durch einen Motor angetrieben, sondern mit Druckluft, welche ein Turbinenrad in Rotation versetzt. Das Turbinenrad sowie eine Aufnahme für ein Werkzeug sind typischerweise in einem sogenannten Kopfteil untergebracht, welches an einem ersten Ende eines Griffteils angeordnet ist. Die Druckluft zum Antreiben des Turbinenrads wird typischerweise durch einen Dentaleinheit bereitgestellt. Hierfür verfügt das Griffteil an einem dem Kopfteil gegenüberliegenden zweiten Ende über einen entsprechenden Anschluss zur Verbindung mit einem mit Druckluft beaufschlagten Schlauch einer Dentaleinheit. Auch weitere typischerweise genormte Anschlüsse für weitere Medien, z.B. Licht und/oder Wasser, können an dem zweiten Ende angeordnet sein. Im Griffteil sind entsprechende Leitungen, z.B. Rohr, Schlauch und/oder Lichtleiter, angeordnet, um jedes Medium von dem entsprechenden Anschluss zu dem Kopfteil und/oder einem am Kopfteil oder an dem ersten Ende des Griffteils angeordneten entsprechenden Ausgang zu leiten. Aufgrund der hohen Anforderungen bzw. der hohen Belastung, der ein zahnärztliches Instrument im Alltag ausgesetzt ist, ist es erstrebenswert, die im Instrument geführten Medienleitungen und/oder Medienausgänge leicht zugänglich zu gestalten.

Eine Lösung ist beispielsweise aus der CH 680 042 A5 bekannt, die ein zahnärztliches Instrument mit einem Griffteil, einem Kopfteil und einem mit dem Kopfteil fest verbundenen Metallkanal für die Luftzufuhr offenbart, wobei der Metallkanal an einem Ende ein Außengewinde aufweist. Das Kopfteil des Instruments wird mit dem Griffteil mittels eines an einer Stufe an einer Innenwand des Griffteils anliegenden Halteblechs und einer auf das Außengewinde des Metallkanals, in Richtung des Halteblechs aufgeschraubten Mutter verspannt.

Beim aus DE 1 064 682 B1 bekannten zahnärztlichen Instrument ist die Instrumentenhülse am vorderen und hinteren Ende der eigentlichen Griffhülse quergeteilt ausgeführt, wobei sich die Wasser- und Luftzuführungsrohre vom Kopf bis zur Kupplung am hinteren Ende des Instrumentes ungeteilt erstrecken. Der an die Griffhülse anschließende) Teil der Instrumentenhülse ist mit einer Halterungshülse für die Rohre kuppelbar gestaltet. Zweckmäßig erfolgt dabei die Kupplung der an die Griffhülse anschließenden Hülse mit der Halterungshülse für die Rohre unter gleichzeitiger Zentrierung und Festlegung der Griffhülse. Die Halterungshülse für die Rohre kann am vorderen Ende der an die Griffhülse anschließenden Hülse angeordnet sein. Besonders zweckmäßig ist vorgesehen, das vordere mit Innengewinde versehene Ende der an die Griffhülse anschließenden Hülse auf die mit Außengewinde versehene Halterungshülse für die Rohre aufzuschrauben.

Der vorliegenden Erfindung liegt die Aufgabe zugrunde, den vorgenannten Stand der Technik weiterzubilden.

### Darstellung der Erfindung

Der Gegenstand der Erfindung ist in den Ansprüchen 1 bis 9 definiert und betrifft ein strömungsbetriebenes zahnärztliches Instrument, umfassend ein Griffteil, ein Kopfteil, eine Medienleitung für ein Medium und ein Befestigungsmittel zur Verbindung des Kopfteils mit dem Griffteil.

Das Griffteil ist hülsenförmig mit einem ersten Ende und einem zweiten Ende ausgebildet. An dem ersten Ende des Griffteils ist ein Medienanschluss für einen das Medium bereitstellende Zuleitung angeordnet. An dem zweiten Ende des Griffteils ist das Kopfteil angeordnet und reicht zumindest teilweise in das Griffteil hinein. Die Medienleitung ist mit dem Kopfteil kraftschlüssig, formschlüssig und/oder stoffschlüssig verbunden und die Medienleitung verläuft von dem Kopfteil durch das Griffteil zu dem Medienanschluss.

Das Befestigungsmittel weist eine Hülse mit einem Außengewinde und eine Mutter mit einem dem Außengewinde entsprechenden Innengewinde auf, wobei die Hülse zwischen dem ersten Ende der Medienleitung und einem zweiten Ende der Medienleitung um die Medienleitung herum an einer Außenwand der Medienleitung angeordnet ist und mit der Außenwand stoffschlüssig verbunden ist. Die Mutter ist in dem Griffteil angeordnet und wird zumindest in eine Richtung zum Kopfteil hin in einer festen Position relativ zum Griffteil in dem Griffteil gehalten. Zur Befestigung des Kopfteils an dem Griffteil ist die Mutter zumindest teilweise auf die Hülse aufgeschraubt.

Es sei angemerkt, dass der Begriff Medienleitung jede Leitung einschließt, die dazu geeignet ist ein Medium, wie z.B. Wasser oder Luft, zu führen. Die Medienleitung, an der die Hülse befestigt wird, ist gemäß einer vorteilhaften Ausführungsform eine Druckluftleitung für die Treibluft zum Antreiben der Turbine. In alternativen Ausführungsformen ist die Medienleitung eine Sprayluft- oder Spraywasserleitung.

Der Stoffschluss zwischen der Hülse und der Medienleitung kann beispielsweise durch Löten, durch Schweißen oder durch Kleben erfolgen. Ebenso ist es möglich, die Medienleitung mit der Hülse einstückig auszubilden.

Durch die Hülse wird die Medienleitung im Bereich des Gewindes verdickt. Hierdurch wird ein stabiles Gewinde für die Befestigung des Kopfteils am Griffteil bereitgestellt. Die durch die Gewinde bereitgestellte lösbare Verbindung von Kopf- und Griffteil ermöglicht einen einfachen Zugang zu den Medienleitungen und eine einfache Wartung. Die restliche Medienleitung ist mit einer dünneren Wandstärke und entsprechend wenig Platzbedarf ausgeführt.

Ein Vorteil der Erfindung ist, dass ein strömungsbetriebenes dentales Instrument mit einer einfachen, stabilen und kleinen Bauform mit leicht zugänglichen Medienleitungen bereitgestellt wird.

Vorteilhafterweise ist die Medienleitung als Rohr oder als Schlauch ausgebildet. Die Medienleitung unterliegt keinen besonderen, der Erfindung geschuldeten Anforderungen und kann in den technisch möglichen bzw. zulässigen Ausführungsformen ausgeführt sein.

Erfindungsgemäß weist die Medienleitung in einem die Hülse umfassenden Bereich zusammen mit der Hülse eine erste Wandstärke und in einem restlichen Bereich eine zweite Wandstärke auf, wobei die erste Wandstärke größer als die zweite Wandstärke ist, insbesondere beträgt die zweite Wandstärke vorteilhafterweise zwischen 0,1 mm und 0,3 mm und/oder die erste Wandstärke zwischen 0,2 und 0,5 mm.

Es sei angemerkt, dass die erster Wandstärke die Wandstärke der Medienleitung, der Hülse mit Gewinde sowie gegebenenfalls einem Verbindungsmittel, z.B. Kleber, umfasst. Die erste Wandstärke ist die Strecke von der Innenwand der Medienleitung bis zu der äußerten Spitze der Gewindeflanken der Hülse. Mit zweiter Wandstärke wird entsprechend die Wandstärke der Medienleitung des nicht von der Hülse umgebenen Bereichs der Medienleitung bezeichnet.

Je dünner die Medienleitung in den restlichen Bereichen ist, umso geringer kann die Gesamtgröße des Instruments ausfallen. Durch eine lokale Erhöhung der Wandstärke durch das Anbringen der Hülse wird ein stabiles Gewinde bereitgestellt. Vorteilhafterweise umfasst die Hülse und/oder die Medienleitung Edelstahl, Messing oder eine Kupfer-Nickel-Zink-Legierung, z.B. Neusilber, um eine ausreichend stabile und auch den hygienischen Anforderungen an dentale Instrumente entsprechende Hülse und/oder Medienleitung bereitzustellen.

Vorteilhafterweise weist das Außengewinde der Hülse eine Steigung von 0,2 bis 0,4 mm oder von 0,25 bis 0,35 mm auf, um eine stabile Verbindung zwischen Kopfteil und Griffteil sicherzustellen. Als Steigung wird der Abstand zwischen zwei Gewindespitzen bzw. die Ganghöhe bezeichnet. Vorteilhafterweise ist die Hülse mittels Löten oder mittels Kleben mit der Außenwand der Medienleitung stoffschlüssig verbunden. Hierdurch können die Hülse und die Medienleitung auf einfache weise einzeln hergestellt bzw. entsprechende übliche Bauteile verwendet werden und Hülse und Medienleitung können auf einfache Weise verbunden werden. Vorteilhafterweise ist die Hülse um mindestens zwei Medienleitungen herum angeordnet, um die Stabilität der Verbindung von Mutter und Hülse bzw. Kopfteil und Griffteil zu erhöhen und insbesondere auch eine stabile Verbindung mittels nur weniger Gewindegänge herzustellen.

Kurzbeschreibung der Zeichnungen Ausführungsbeispiele der Erfindung sind in der Zeichnung dargestellt. Es zeigt die
- Fig. 1: ein schematische Darstellung einer ersten Ausführungsform eines strömungsbetriebenen dentalen Instruments,
- Fig. 2: eine schematische Darstellung einer ersten Ausführungsform einer erfindungsgemäßen Medienleitung,
- Fig. 3: eine Aufsicht auf ein Halteblech aus Fig. 1,
- Fig. 4: eine vergrößerte Darstellung eines Ausschnitts einer zweiten Ausführungsform eines strömungsbetriebenen dentalen Instruments.

### Ausführungsbeispiele

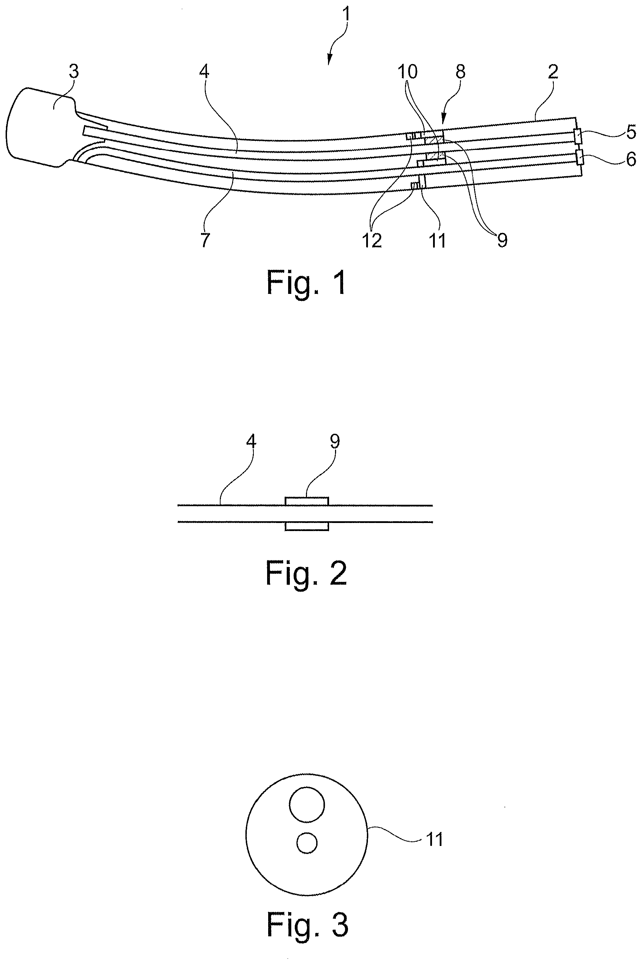

Die Fig. 1 zeigt schematisch eine erste Ausführungsform eines erfindungsgemäßen strömungsbetriebenen zahnärztlichen Instruments 1. Das Instrument 1 weist ein Griffteil 2 und ein Kopfteil 3 auf.

Im Kopfteil 3 ist eine strömungsbetriebene Turbine zum Betreiben eines Werkzeugs und eine entsprechende Aufnahme für das Werkzeug angeordnet (nicht dargestellt). Die Druckluft für das Betreiben der Turbine wird mittels einer Medienleitung 4 zu dem Kopfteil 3 geleitet. Ein erstes Ende der Medienleitung 4 ist hierfür an dem Kopfteil 3 befestigt.

Das Griffteil 2 ist hülsenförmig mit einem ersten Ende und einem zweiten Ende ausgebildet, wobei das zweite Ende eine erste Öffnung aufweist. Das erste Ende weist im dargestellten Ausführungsbeispiel einen Druckluftanschluss 5 zum Anschließen eines mit Druckluft beaufschlagten Schlauchs (nicht dargestellt) sowie einen Wasseranschluss 6 zum Anschließen einer Wasser führenden Zuleitung (nicht dargestellte) auf.

Das Kopfteil 3 reicht zumindest teilweise in die erste Öffnung des Griffteils 2 hinein, wobei die Medienleitung 4 von dem Kopfteil 3 durch das Griffteil 2 bis zu dem Druckluftanschluss 5 reicht, um Druckluft aus einem angeschlossenen mit Druckluft beaufschlagten Schlauch zu der Turbine im Kopfteil 3 zu leiten.

Eine als Wasserleitung 7 ausgebildete weitere Medienleitung reicht von dem Wasseranschluss 6 an dem ersten Ende des Griffteils 2 durch das Griffteil 2 zu einer im Bereich des zweiten Endes des Griffteils 2 angeordneten zweiten Öffnung des Griffteils 2, um Kühlwasser, auch Spraywasser genannt, bereitzustellen.

Das Kopfteil 3 ist mittels eines Befestigungsmittels 8 an dem Griffteil 2 befestigt. Das Befestigungsmittels 8 umfasst eine Hülse 9 mit einem Außengewinde sowie eine Mutter 10 mit dem Außengewinde entsprechendem Innengewinde.

Die Hülse 9 ist zwischen dem ersten Ende der Medienleitung 4 und einem zweiten Ende der Medienleitung 4 an einer Außenwand der Medienleitung 4 angeordnet und mit der Außenwand stoffschlüssig, z.B. durch Löten oder Kleben, verbunden.

Die Mutter ist in dem Griffteil 2 angeordnet und liegt an einem Halteblech 11 an. Das Halteblech 11 weist Durchgangslöcher für die Medienleitung 4 mit der Hülse 9 und für die Wasserleitung 7 auf und liegt an einem Vorsprung 12 einer Innenwand des Griffteils 2 an. Die Mutter 10 wird somit durch einen Formschluss in Richtung des Kopfteils 3 im Griffteil 2 gehalten.

In Figur 2 ist schematisch eine Medienleitung mit an der Außenwand angeordneter Hülse 9 dargestellt.

Figur 3 zeigt eine schematische Aufsicht auf das Halteblech 11 aus Figur 1 mit den Durchgangslöchern für die Medienleitung 4 und die Wasserleitung 7.

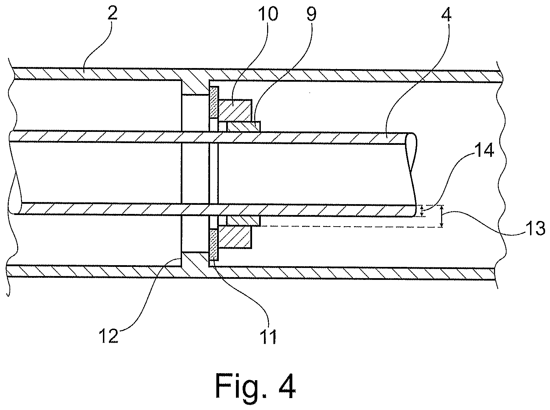

Figur 4 zeigt einen Ausschnitt eines strömungsbetriebenen dentalen Instruments 1 gemäß einer zweiten Ausführungsform. Das Instrument 1 führt lediglich eine Medienleitung 4, z.B. die Druckluftleitung. Der dargestellte Ausschnitt umfasst einen Teil des Griffteils 2, einen Teil der Medienleitung 4, die Mutter 10, die Hülse 9, ein Halteblech 11 mit einem Durchgangsloch für die Medienleitung und den Vorsprung 12 an der inneren Oberfläche des Griffteils 2. Ferner sind in dem Ausschnitt eine erste Wandstärke 13 und eine zweite Wandstärke 14 der Medienleitung 4 referenziert. Die erste Wandstärke 13 bezeichnet die Wandstärke im Bereich der Hülse 9, also die sich aus Medienleitung 4 und Hülse 9 mit Außengewinde ergebende Gesamtwandstärke. Mit zweiter Wandstärke 14 wird die Wandstärke der Medienleitung 4 in einem restlichen, nicht die Hülse umfassenden Bereich der Medienleitung 4 bezeichnet.

## Patentansprüche

1. Strömungsbetriebenes zahnärztliches Instrument (1), umfassend ein Griffteil (2), ein Kopfteil (3), eine Medienleitung (4) für ein Medium und ein Befestigungsmittel (8) zur Verbindung des Kopfteils (3) mit dem Griffteil (2), wobei
- das Griffteil (2) hülsenförmig mit einem ersten Ende und einem zweiten Ende ausgebildet ist,
- an dem ersten Ende des Griffteils (2) ein Medienanschluss (5) für eine das Medium bereitstellende Zuleitung angeordnet ist,
- an dem zweiten Ende des Griffteils (2) das Kopfteil (3) angeordnet ist und zumindest teilweise in das Griffteil (2) hineinreicht,
- die Medienleitung (4) mit dem Kopfteil (3) kraftschlüssig, formschlüssig und/oder stoffschlüssig verbunden ist,
- die Medienleitung (4) von dem Kopfteil (3) durch das Griffteil (2) zu dem Medienanschluss (5) verläuft,
- das Befestigungsmittel (8) ein Außengewinde und eine Mutter (10) mit einem dem Außengewinde entsprechenden Innengewinde aufweist,
- die Mutter (10) in dem Griffteil (2) angeordnet und zumindest in eine Richtung zum Kopfteil (3) hin in einer festen Position relativ zum Griffteil (2) in dem Griffteil (2) gehalten wird und
- die Mutter (10) zur Befestigung des Kopfteils (3) an dem Griffteil (2) zumindest teilweise auf das Befestigungsmittel (8) aufgeschraubt ist, wobei
- das Außengewinde an einer Hülse (9), die zwischen einem ersten Ende der Medienleitung (4) und einem zweiten Ende der Medienleitung (4) um die Medienleitung (4) herum an einer Außenwand der Medienleitung (4) angeordnet und mit der Außenwand stoffschlüssig verbunden ist, vorgesehen ist und wobei
- die Medienleitung (4) in einem die Hülse (9) umfassenden Bereich zusammen mit der Hülse (9) eine erste Wandstärke (13) und in einem restlichen Bereich eine zweite Wandstärke (14) aufweist, wobei die erste Wandstärke (13) größer als die zweite Wandstärke (14) ist.

2. Strömungsbetriebenes zahnärztliches Instrument (1) nach Anspruch 1, **dadurch gekennzeichnet, dass** die Medienleitung (4) als Rohr oder als Schlauch ausgebildet ist.

3. Strömungsbetriebenes zahnärztliches Instrument (1) nach Anspruch 1 oder 2, **dadurch gekennzeichnet, dass** die Mutter (10) in eine Richtung zum Kopfteil (3) hin mittels eines Halteblechs (11) und eines Vorsprungs (12) an einer Innenwand des Griffteils (2) in dem Griffteil (2) gehalten wird.

4. Strömungsbetriebenes zahnärztliches Instrument (1) nach einem der Ansprüche 1 bis 3, **dadurch gekennzeichnet, dass** die zweite Wandstärke (14) zwischen 0,1 mm und 0,3 mm beträgt und/oder die erste Wandstärke (13) zwischen 0,2 und 0,5 mm beträgt.

5. Strömungsbetriebenes zahnärztliches Instrument (1) nach einem der Ansprüche 1 bis 4, **dadurch gekennzeichnet, dass** die Hülse (9) und/oder die Medienleitung (4) Edelstahl, Messing oder eine Kupfer-Nickel-Zink-Legierung umfassen.

6. Strömungsbetriebenes zahnärztliches Instrument (1) nach einem der Ansprüche 1 bis 5, **dadurch gekennzeichnet, dass** das Außengewinde der Hülse (9) eine Steigung von 0,2 bis 0,4 mm oder von 0,25 bis 0,35 mm aufweist.

7. Strömungsbetriebenes zahnärztliches Instrument (1) nach einem der Ansprüche 1 bis 6, **dadurch gekennzeichnet, dass** die Hülse (9) mittels Löten oder mittels Kleben mit der Außenwand der Medienleitung (4) stoffschlüssig verbunden ist.

8. Strömungsbetriebenes zahnärztliches Instrument (1) nach einem der Ansprüche 1 bis 7, **dadurch gekennzeichnet, dass** die Medienleitung (4) eine Druckluftleitung für Treibluft, eine Spraywasserleitung oder eine Sprayluftleitung ist.

9. Strömungsbetriebenes zahnärztliches Instrument (1) nach einem der Ansprüche 1 bis 8, **dadurch gekennzeichnet, dass** die Hülse (9) um mindestens zwei Medienleitungen (4) herum angeordnet ist.

## Claims

1. A fluid-driven dental instrument (1) comprising a grip part (2), a head part (3), a media line (4) for a medium and a fastening means (8) for connecting the head part (3) to the grip part (2), wherein
- the grip part (2) is sleeve-shaped having a first end and a second end,
- a media connection (5) for a supply line providing the medium is arranged on the first end of the grip part (2),
- the head part (3) is arranged on the second end of the grip part (2) and extends at least partially into the grip part (2),
- the media line (4) is connected to the head part (3) in a force-fit, form-fit and/or material-fit manner,
- the media line (4) runs from the head part (3) through the grip part (2) to the media connection (5),
- the fastening means (8) has an external thread and a nut (10) having an internal thread corresponding to the external thread,
- the nut (10) is arranged in the grip part (2) and is held in said grip part (2) in a fixed position relative to the grip part (2) at least in a direction towards the head part (3) and
- the nut (10) for fastening the head part (3) to the grip part (2) is at least partially screwed onto the fastening means (8), wherein
- the external thread is provided on a sleeve (9) which is arranged between a first end of the media line (4) and a second end of the media line (4) around the media line (4) on an outer wall of the media line (4) and is integrally connected to the outer wall is, and wherein
- the media line (4) has a first wall thickness (13) together with the sleeve (9) in an area comprising the sleeve (9) and a second wall thickness (14) in a remaining area, wherein the first wall thickness (13) is greater than that second wall thickness (14).

2. The fluid-driven dental instrument (1) according to claim 1, **characterised in that** the media line (4) is designed as a pipe or a hose.

3. The fluid-driven dental instrument (1) according to claim 1 or 2, **characterised in that** the nut (10) is held in the grip part (2) in a direction towards the head part (3) by means of a holding plate (11) and a projection (12) on an inner wall of the grip part (2).

4. The fluid-driven dental instrument (1) according to any one of claims 1 to 3, **characterised in that** the second wall thickness (14) is between 0.1 mm and 0.3 mm and/or the first wall thickness (13) is between 0.2 and 0.5 mm.

5. The fluid-driven dental instrument (1) according to any one of claims 1 to 4, **characterised in that** the sleeve (9) and/or the media line (4) comprise stainless steel, brass or a copper-nickel-zinc alloy.

6. The fluid-driven dental instrument (1) according to any one of claims 1 to 5, **characterised in that** the external thread of the sleeve (9) has a pitch of 0.2 to 0.4 mm or of 0.25 to 0.35 mm.

7. The fluid-driven dental instrument (1) according to any one of claims 1 to 6, **characterised in that** the sleeve (9) is integrally connected to the outer wall of the media line (4) by means of soldering or gluing.

8. The fluid-driven dental instrument (1) according to any one of claims 1 to 7, **characterised in that** the media line (4) is a compressed air line for propellant air, a spray water line or a spray air line.

9. The fluid-driven dental instrument (1) according to any one of claims 1 to 8, **characterised in that** the sleeve (9) is arranged around at least two media lines (4).

## Revendications

1. Instrument dentaire actionné par écoulement (1) comprenant une partie poignée (2), une partie tête (3), une conduite de milieu (4) pour un milieu et un moyen de fixation (8) pour raccorder la partie tête (3) à la partie poignée (2), dans lequel
- la partie poignée (2) est conçue sous la forme de manchon comportant une première extrémité et une seconde extrémité,
- à la première extrémité de la partie poignée (2), un raccord de milieu (5) pour une conduite fournissant le milieu est disposé,
- à la seconde extrémité de la partie poignée (2), la partie tête (3) est disposée et pénètre au moins partiellement dans la partie poignée (2),
- la conduite de milieu (4) est raccordée à la partie tête (3) par liaison de complémentarité de force, par liaison de complémentarité de forme et/ou liaison de complémentarité de matière,
- la conduite de milieu (4) s'étend de la partie tête (3) à travers la partie poignée (2) jusqu'au raccord de milieu (5),
- le moyen de fixation (8) comporte un filetage extérieur et un écrou (10) comportant un filetage intérieur correspondant au filetage extérieur,
- l'écrou (10) est disposé dans la partie poignée (2) et est maintenu au moins dans une direction vers la partie tête (3) dans une position fixe par rapport à la partie poignée (2) dans la partie poignée (2) et
- l'écrou (10), pour la fixation de la partie tête (3) à la partie poignée (2), est au moins partiellement vissé sur les moyens de fixation (8), dans lequel
- le filetage extérieur est situé sur un manchon (9), lequel est disposé entre une première extrémité de la conduite de milieu (4) et une seconde extrémité de la conduite de milieu (4) autour de la conduite de milieu (4) sur une paroi extérieure de la conduite de milieu (4) et est raccordé par liaison de complémentarité de matière à la paroi extérieure et dans lequel
- la conduite de milieu (4), dans une zone comprenant le manchon (9), présente, avec le manchon (9), une première épaisseur de paroi (13) et, dans une zone restante, une seconde épaisseur de paroi (14), dans lequel la première épaisseur de paroi (13) étant supérieure à la seconde épaisseur de paroi (14).

2. Instrument dentaire actionné par écoulement (1) selon la revendication 1, **caractérisé en ce que** la conduite de milieu (4) est conçue sous la forme d'un tube ou d'un tuyau.

3. Instrument dentaire actionné par écoulement (1) selon la revendication 1 ou 2, **caractérisé en ce que** l'écrou (10) est maintenu dans une direction vers la partie tête (3) au moyen d'une tôle de retenue (11) et d'une saillie (12) sur une paroi intérieure de la partie poignée (2) dans la partie poignée (2).

4. Instrument dentaire actionné par écoulement (1) selon l'une quelconque des revendications 1 à 3, **caractérisé en ce que** la seconde épaisseur de paroi (14) est dans la plage comprise entre 0,1 mm et 0,3 mm et/ou la première épaisseur de paroi (13) est dans la plage comprise entre 0,2 et 0,5 mm.

5. Instrument dentaire actionné par écoulement (1) selon l'une quelconque des revendications 1 à 4, **caractérisé en ce que** le manchon (9) et/ou la conduite de milieu (4) comprennent l'acier inoxydable, le laiton ou un alliage cuivre-nickel-zinc.

6. Instrument dentaire actionné par écoulement (1) selon l'une quelconque des revendications 1 à 5, **caractérisé en ce que** le filetage extérieur du manchon (9) présente un pas de 0,2 à 0,4 mm ou de 0,25 à 0,35 mm.

7. Instrument dentaire actionné par écoulement (1) selon l'une quelconque des revendications 1 à 6, **caractérisé en ce que** le manchon (9) est raccordé par liaison de complémentarité de matière, par brasage ou collage, à la paroi extérieure de la conduite de milieu (4).

8. Instrument dentaire actionné par écoulement (1) selon l'une quelconque des revendications 1 à 7, **caractérisé en ce que** la conduite de milieu (4) est une conduite d'air comprimé pour l'air propulseur, une conduite d'eau de pulvérisation ou une conduite d'air de pulvérisation.

9. Instrument dentaire actionné par écoulement (1) selon l'une quelconque des revendications 1 à 8, **caractérisé en ce que** le manchon (9) est disposé autour d'au moins deux conduites de milieu (4).
